Europäisches Patentamt

European Patent Office

Office européen des brevets

(11) Numéro de publication: **0 224 421**

**A1**

## (12) DEMANDE DE BREVET EUROPEEN

(21) Numéro de dépôt: 86420260.1

(51) Int. Cl.⁴: **A 22 C 11/12**

(22) Date de dépôt: 23.10.86

(30) Priorité: 24.10.85 FR 8516248

(43) Date de publication de la demande:
03.06.87 Bulletin 87/23

(84) Etats contractants désignés:
AT BE CH DE ES GB GR IT LI LU NL SE

(71) Demandeur: ETABLISSEMENTS CHARLES FRERES & CIE, S.A.
F-42580 L'Etrat (FR)

(72) Inventeur: Pujol, Yves
15 Rue Plantevin
F-81000 Albi France (FR)

(74) Mandataire: Dupuis, François
Cabinet Charras 3 Place de l'Hôtel-de-Ville BP 203
F-42005 St. Etienne Cédex 1 (FR)

(54) **Perfectionnements aux machines automatiques permettant de ligaturer au moyen d'un fil, ficelle ou analogues, des produits du type saucisses, saucissons et similaires.**

(57) Perfectionnements aux machines automatiques permettant de ligaturer au moyen d'un fil, ficelle ou analogues, des produits du types saucisses, saucissons et similaires.

Cette machine comprend, disposés sur un bâti de base (1) agencé et profilé de manière appropriée, des moyens permettant la mise en forme simultanée de "n" ligatures sur des produits se présentant en continu avec des mécanismes correspondant au nombre de ligatures à effectuer, la formation des ligatures et leur dépose sur les produits à ligaturer s'effectuant selon un cycle préétabli et progressif, ligature par ligature,

-des mécanismes de contrôle en alimentation en fil (42, 40, 41, 39) (38-1, 38-2),

- des mécanismes tendeurs de fil (37a, 37b, 37c, 28, 34a, 34b, 34c),

-des mécanismes de serrage complémentaires des noeuds (46a, 47a, 48a, 46b, 47b, 48b),

- des mécanismes de présentation du fil (4, 3a, 3),

- des agencements particuliers des moyens de déformation de la trajectoire du fil déroulé devant les têtes de nouage (8a, 9a, 10a) (8b, 9b, 10b) (8c, 9c, 10c), des moyens assurant la commande commune et séparée des divers mécanismes nécessaires à la formation des ligatures et au déplacement des organes de préhension des produits à ligaturer, l'ensemble des moyens et mécanismes précités assurant une automatisation complète de fabrication de "n" ligatures sur des produits précités.

FIG.1

EP 0 224 421 A1

**Description**

L'invention concerne des perfectionnements aux machines automatiques permettant de ligaturer au moyen d'un fil, ficelle ou analogues des produits du types saucisses, saucissons et similaires.

On rappelle que les extrémités des saucisses, saucissons et produits similaires présentent un lien de nouage par fil, ficelle et analogues pour d'une part maintenir fermement le contenu de viande dans le boyau et d'autre part obtenir différentes sortes de produits commercialisés, les saucisses pouvant être présentées seules, ou en chapelet, la ficelle étant coupée tous les noeuds, tous les deux, trois, quatre noeuds, etc...

Une machine automatique fonctionnant seule sans intervention manuelle d'un opérateur permet de combiner les actions de coupe en longueur des chapelets de saucisses, saucissons et produits similaires avec les actions de nouage, et est décrite dans la Demande de Brevet Européen publiée sous le numéro 0080422. Cette machine est exploitée par la déposante qui en connaît donc parfaitement les caractéristiques.

Si l'on fait référence à cette Demande, il apparaît qu'elle comprend un automatisme permettant la formation du noeud, en l'occurence un noeud marin dit noeud cabestan, et la dépose de la ligature sur l'extrémité du produit traité. Pour effectuer les ligatures successivement aux deux extrémités du produit traité, on utilise une semelle de chargement déplaçable dans certaines conditions et présentant successivement chacune des extrémités du produit à l'intérieur de la ligature préalablement formée.

Ces dispositions fonctionnent de manière satisfaisante. Cependant, il y a lieu de noter que les ligatures s'effectuent les unes après les autres et que le rendement de la machine, bien que déjà très supérieur aux techniques antérieures, est limité par le temps de fonctionnement du mécanisme.

Le problème posé était donc de trouver une solution satisfaisante permettant de réaliser dans un même cycle opératoire plusieurs ligatures, deux, trois, quatre et plus générale ment "n" ligatures sur une pluralité de produits.

De nombreux problèmes techniques étaient à résoudre notamment dans la mise en forme simultanée de plusieurs ligatures, dans la reprise du fil, dans la mise en tension du fil, dans l'action de serrage des ligatures de plusieurs produits. En particulier dans cette phase de fonctionnement, il fallait trouver une solution permettant de conserver des brins mous entre deux endroits de ligaturage et assurer leur élimination lors du serrage définitif.

Les perfectionnements apportés selon l'invention sont de nature à résoudre les problèmes posés et grâce à des dispositions nouvelles et originales, la machine automatique offre une très grande augmentation du rendement avec une grande fiabilité.

Selon une première caractéristique, les perfectionnements aux machines automatiques permettant de ligaturer au moyen d'un fil, ficelles ou analogues des produits du type saucisses, saucissons et similaires, sont du type comprenant notamment :
- un mécanisme contrôlant l'amenée et la distribution du fil,
- un mécanisme assurant le serrage du fil puis son déroulement vers la zône d'entrelacement selon une trajectoire rectiligne contrôlée en vue de former la ligature,
- un mécanisme assurant la mise en forme du fil pour la ligature par déformations successives et complémentaires de sa trajectoire dans plusieurs directions par rapport à la trajectoire rectiligne initiale en vue de ligaturer les produits sous la forme d'un noeud dit cabestan,
- un mécanisme assurant la préhension du produit à ligaturer et son positionnement à l'intérieur de la zône de ligaturage par une translation contrôlée perpendiculaire à la trajectoire rectiligne initiale du fil,
- un mécanisme assurant la dépose de la ligature sur le produit,
- un mécanisme assurant le serrage du noeud après dépose de la ligature sur les produits.

Les perfectionnements sont remarquables en ce que la machine comprend :
- des moyens permettant : la mise en forme simultanée de "n" ligatures sur les produits se présentant en continu avec des mécanismes en nombre correspondant au nombre de ligatures à effectuer, la formation des ligatures et leur dépose sur les produits à ligaturer s'effectuant selon un cycle préétabli et progressif, ligature par ligature ;
- des mécanismes de contrôle en alimentation en fil ;
- des mécanismes tendeurs du fil ;
- des mécanismes de serrage complémentaire des noeuds ;
- des mécanismes de présentation du fil ;
- des agencements particuliers des moyens de déformation de la trajectoire du fil déroulé devant les têtes de nouages ;
- des moyens assurant la commande commune ou séparée des divers mécanismes nécessaires à le formation des ligatures et au déplacement des organes de préhension des produits à ligaturer ;
- l'ensemble des moyens et mécanismes précités assurant une automatisation complète de fabrication de "n" ligatures sur des produits précités.

Ces caractéristiques et d'autres encore ressortiront bien de la suite de la description.

Pour fixer l'objet de l'invention, illustrée d'une manière non limitative aux figures des dessins où :

La figure 1 est une vue en perspective en position repos de l'ensemble des mécanismes autorisant la mise en forme de plusieurs ligatures dans un même cycle, trois par exemple, et le dispositif de serrage.

La figure 2 est une vue à grande échelle illustrant les organes d'une tête de nouage.

Les figures 3, 4 et 5 sont des vues en perspectives à grande échelle illustrant la mise en forme simultanée avec un déphasage opératoire de trois ligatures conduisant au serrage successif de chaque noeud.

La figure 6 est une vue en coupe selon la ligne B-B de la figure 7 de l'un des blocs de serrage à position fixe d'un dispositif d'alimentation en fil de la machine.

La figure 7 est une vue de face en coupe partielle AA de la figure 6.

La figure 8 est une vue en coupe selon la ligne DD de la figure 9 du bloc de serrage à position mobile du dispositif d'alimentation en fil de la machine.

La figure 9 est une vue de face en coupe partielle BB de la figure 8.

La figure 10 est une vue partielle à grande échelle en variante en perspective illustrant notamment les mécanismes de dépose des noeuds sur les extrémités des produits à ligaturer.

La figure 11 est une vue illustrant le mode de pose des noeuds et le doublage des mécanismes tendeurs et distributeur de fil pour le serrage des noeuds.

La figure 12 est une vue partielle à grande échelle illustrant la phase de dépose et de serrage des noeuds.

Afin de rendre plus concret l'objet de l'invention, on le décrit maintenant d'une manière non limitative illustrée aux figures des dessins.

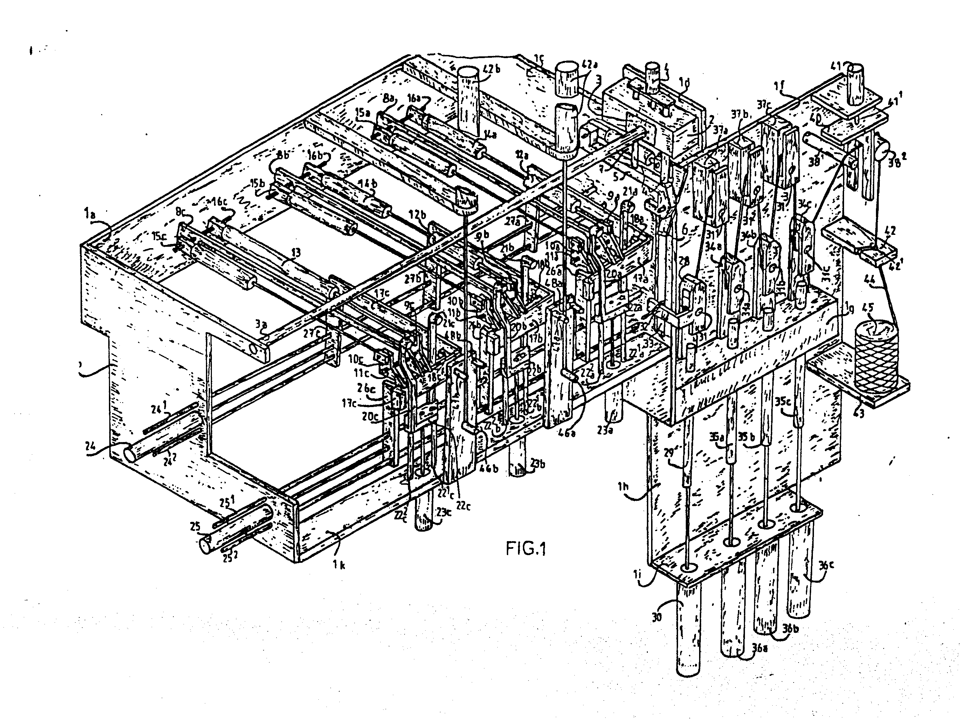

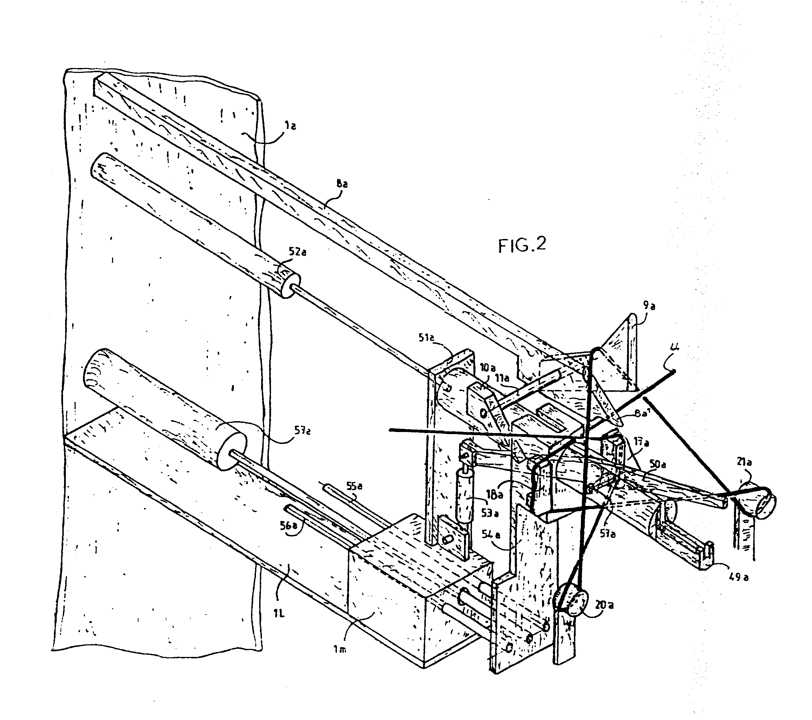

Préalablement, il y a lieu de signaler que les perfectionnements apportés sont intégrés et/ou sont en complément de certains mécanismes décrits et illustrés dans la Demande Européenne 0080422. Aussi, dans la description qui suit afin de rendre le plus compréhensible possible la nature des perfectionnements apportés, il sera fait référence à chaque fois que nécessaires, pour les parties connues aux figures et parties descriptives correspondantes de ladite Demande Européenne 0080422. Certains mécanismes décrits dans la Demande Européenne ont toutefois été agencés de manière particulière pour s'adapter au fonctionnement spécifique de la machine objet de la Demande. Par ailleurs, certains mécanismes n'ont pas été illustrés pour la clarté des dessins, tels que les mécanismes assurant le chargement et la présentation des produits à ligaturer dans les zônes de ligaturage, les moyens de coupe des produits à ligaturer, l'outil de coupe du fil. Egalement, certains mécanismes n'ont pas été illustrés figure 1, ou figure 2, pour rendre plus explicites les dessins, mais à chaque fois, il est possible de repérer très facilement l'emplacement des mécanismes manquants grâce au positionnement des autres mécanismes et des explications de fonctionnement données.

L'ensemble des mécanismes de la machine est supporté par un bâti (1) agencé avec différentes parties, formant prolongements supports et moyens de guidage des mécanismes, et référencés par 1a, 1b, 1c, 1d, 1e, 1f, 1g, 1h, 1i, 1j, 1k, 1l, 1m.

Les mécanismes supportés ou guidés sont principalement :
- le dispositif de distribution de fil qui participe au serrage des noeuds,
- le dispositif assurant le déroulement du fil devant les organes des têtes de nouage,
- les têtes de nouage assurant la fabrication ou formation du noeud, celui-ci étant un noeud marin ou cabestan,
- les ensembles de préhension et de maintien du produit à ligaturer, ceux-ci assurant en outre la dépose du noeud sur le produit à ligaturer,
- un dispositif de serrage complémentaire de chaque noeud.

En se référant maintenant à la figure 1, on va décrire les mécanismes à partir de la droite du dessin et selon le cycle de fonctionnement de la machine. Le bâti (1) est tout d'abord agencé avec des plans avancés ou en retrait, verticaux ou horizontaux, avec des parois latérales, parfaitement illustrés aux dessins, tout ceci pour permettre après positionnement des différents mécanismes une trajectoire rectiligne du fil d'attache des produits à ligaturer.

Le mécanisme d'alimentation en fil est disposé en bout du bâti. Le fil (44) provient d'une pelote (45) ou autre bobine supportée sur un socle (43) rapporté et fixé perpendiculairement à la paroi du bâti. Le fil (44) est introduit et guidé dans une ouverture échancrée (42-1) formée sur un plateau (42) disposé dans un plan supérieur au support de pelote. Puis le fil est introduit dans un premier mécanisme de serrage de fil, disposé dans un plan supérieur au plateau (42). Ce premier mécanisme de serrage de fil comprend une plaque (40) associée par sa partie supérieure à la tige (41-1) d'un vérin (41) ; ce dernier est monté verticalement et fixement sur un plateau (39) solidaire de la paroi (1f) du bâti (1). La plaque (40) est agencée dans sa partie inférieure avec une forme profilée en fourche (40-1). De part et d'autre de celle-ci sont disposés deux cylindres (38-1) -(38-2), fixés au plan (1f) du bâti de manière à se trouver entre le plateau (42) et la plaque (40). Les deux cylindres (38-1, 38-2) sont disposés à la même hauteur, cependant et d'une manière caractéristique, le diamètre du cylindre (38-2) est supérieur à l'autre. Le fil (44) contourne le cylindre (38-2) et pénètre à l'intérieur de la fourche (40-1), et passe ensuite sur le second cylindre (38-1) pour être ensuite conduit vers le mécanisme tendeur de fil décrit ultérieurement. On comprend bien de ce fait que lors de l'action du vérin (41) vers le bas, la plaque (40) va appuyer fortement le fil (44) sur la génératrice supérieure du cylindre (38-2) créant ainsi une action de freinage lors du déroulement du fil. Ce freinage en amont est accentué par les déformations que font subir à la trajectoire du fil la fourche (40-1) et le cylindre (38-1). Cette disposition constitue un perfectionnement au dispositif d'amenée de fil décrit dans la Demande Européenne 0080422 et participe au fonctionnement général de la machine selon l'invention.

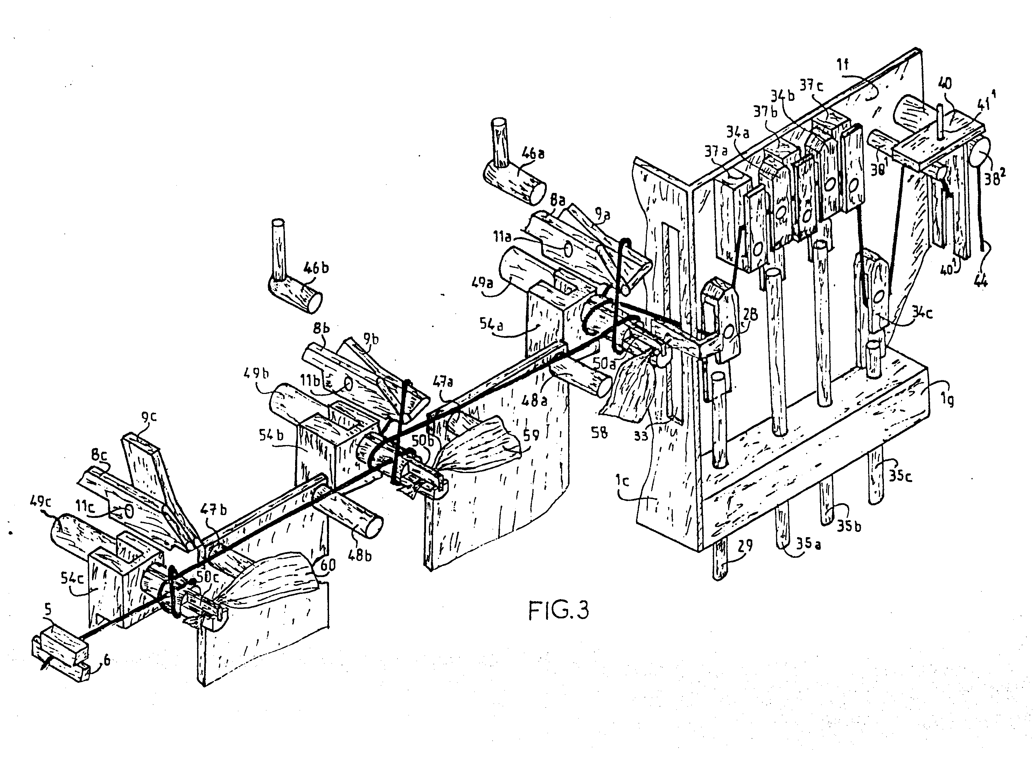

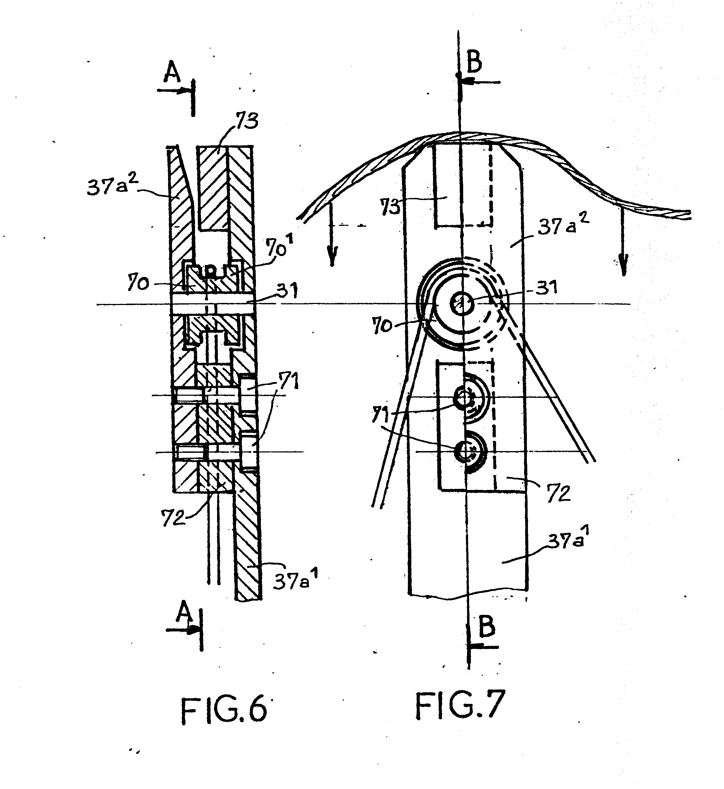

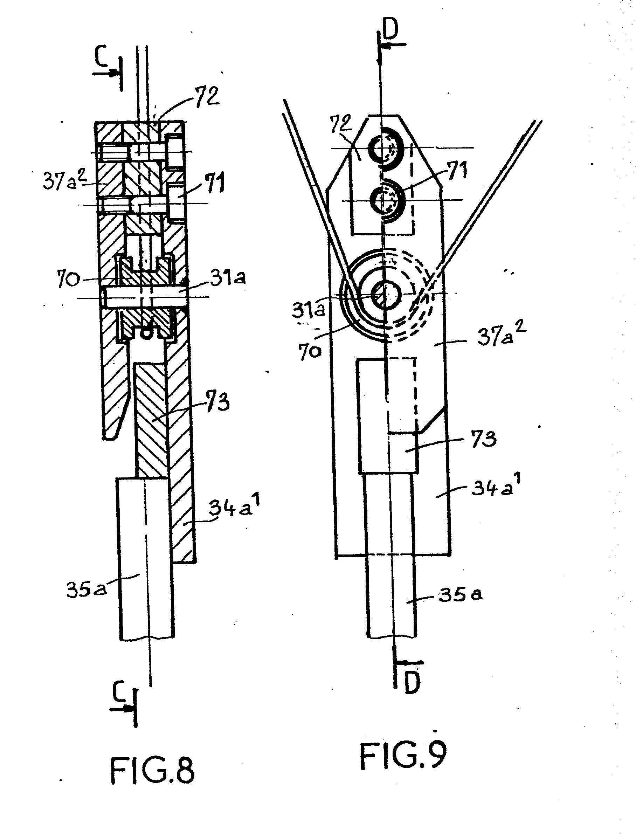

Une autre disposition caractéristique de l'invention réside dans la mise au point d'un mécanisme tendeur et distributeur de fil, disposé entre le dispositif d'amenée et approvisionnant en fil et le dispositif assurant le déroulement du fil devant les organes des têtes de nouage. Le dispositif tendeur est illustré à la figure 1 en position repos, puis aux figures 3, 4 et 5 dans le cas d'une machine permettant de faire trois ligatures simultanément dans un exemple de réalisation non limitatif, ainsi qu'aux figures 6 à 9 illustrant la réalisation particulière des différents moyens le constituant.

Dans l'hypothèse de réalisation de trois ligatures, le dispositif est constitué par trois éléments fixes (37a, 37b, 37c) au bâti, et quatre éléments mobiles (28, 34a, 34b, 34c) verticalement. D'une manière plus générale, il y a autant d'éléments fixes "n" que de têtes de nouages et "n+1" éléments mobiles. Les éléments ont pour fonction de contrôler le déroulement du fil lors de la mise en forme de chacune des ligatures ou noeuds et d'assurer le serrage de ceux-ci au moment opportun. Par ailleurs, l'élément mobile supplémentaire (28) assure une troisième fonction qui est d'amener le fil vers le second mécanisme de serrage qui assure le déroulement dudit fil devant les têtes de nouage.

En se référant à la figure 1, les éléments mobiles (28), (34a, 34b, 34c) sont actionnés par l'intermédiaire des tiges de guidage (29) (35a, 35b, 35c) des vérins (30), (36a, 36b, 36c) fixés sur le support (1i), perpendiculaire à la paroi (1h) du bâti constituant le prolongement de la partie (1F) des parois dudit bâti. Par ailleurs, un bloc (1g) est rapporté et fixé sur lesdites parois (1h) du bâti, dans un plan supérieur du support (1i). Ce bloc (1g) est aménagé avec des ouvertures permettant le passage et le guidage des tiges de vérins associées aux éléments tendeurs mobiles (28-34a-34b-34c).

Par ailleurs, les éléments fixes (37a, 37b, 37c) sont disposés avec un léger intervalle entre eux de manière à permettre le passage des éléments tendeurs mobiles lorsqu'ils sont en position haute, un décalage de positionnement étant donc prévu entre les éléments fixes et les éléments mobiles.

Ainsi qu'il apparaît à la figure 1, le fil (44) est guidé selon un cheminement précis alternativement depuis le mécanisme d'alimentation en fil d'un élément tendeur mobile à un élément tendeur fixe et dans l'exemple des dessins et successivement passe dans les éléments (34c, 37c, 34b, 37b, 34a, 37a et 28).

Il y a lieu de se référer maintenant aux figures 1, 6 à 9 pour décrire la réalisation de chaque élément tendeur.

Chaque élément tendeur fixe (37a, 37b, 37c) et les éléments tendeurs mobiles (34a, 34b, 34c) présentent une forme en chape dont les ouvertures sont orientées vers le haut et vers le bas respectivement et sont aménagées pour recevoir une poulie (70) folle montée sur les axes de rotation (31-1, 31-2, 31-3) et (31a, 31b, 31c).

Pour assurer une parfaite tenue du fil et éviter son déjantage inopiné, les éléments tendeurs peuvent être aménagés de manière particulière. On décrit un élément tendeur fixe et un mobile, les autres étant de même conception.

Chaque élément comprend un flasque (37a1) et (34a1) qui est suivant le cas fixé au bâti (1f) de la machine ou à la tige de guidage (35a) associée au vérin (36a). Un second flasque (37a2) (34a2) est rendu solidaire du précédent par des moyens de liaison du type vis (71) ou équivalent ; une entretoise (72) assurant leur écartement, est disposée dans la zône inférieure de liaison. Dans un plan supérieur est prévu l'axe de rotation (31-1) (31a) de la poulie (70) montée folle. Ledit axe est monté à position fixe. De manière avantageuse, les joues (70-1) de la poulie s'encastrent dans des évidements ménagés dans les flasques assurant une parfaite tenue de la ficelle. Dans la partie supérieure de chaque tendeur, une butée (73) est rapportée sur le flasque (37a1-34a1) tandis que la face en regard de l'autre flasque (37a2) (37a2) présente un chanfreinage facilitant l'introduction de la ficelle. Les dispositions présentent certaines avantages et notamment on cite :
- les efforts sur le brin de ficelle sont réduits par suite du roulement de poulie sur leurs axes ;
- facilité d'introduction de la ficelle ;
- impossibilité de coincement de la ficelle entre la poulie et son flasque ;
- déjantage accidentel de la ficelle pratiquement impossible en égard de l'existence des butées à l'entrée des flasques.

Comme indiqué ci-avant, l'élément tendeur mobile (28) qui assure une troisième fonction d'amener le fil vers le second mécanisme de serrage dudit fil, est agencé de manière distincte par rapport aux autres éléments (34a, 34b, 34c) avec un prolongement équerré formant patte (32) susceptible de coulisser, lors de l'élévation ou l'abaissement dudit élément (28), le long d'une lumière (33) réalisée verticalement dans le support (1c) du bâti. Le support (1c) est disposé dans un plan perpendiculaire au plan d'appui (1F) sur lequel sont disposés les éléments tendeurs précités, fixes et mobiles. Ainsi qu'il apparaît à la figure 1, la ficelle, préalablement guidée par les différents éléments tendeurs, coulisse sur la partie de l'élément tendeur (28) puis est introduite dans la lumière (33) et prend appui sur la patte (32) de l'élément tendeur (28). Ainsi, lorsque celle-ci est en position haute, elle positionne la ficelle entre les mors (5) et (6) du dispositif serre-fil actionné en mouvement par un vérin (7). Ce dispositif serre-fil a été décrit dans la Demande Européenne 80422.

Selon une caractéristique nouvelle de l'invention, le dispositif serre-fil est aminé d'un double mouvement en translation et verticalement. Plus précisément, le serre-fil est monté sur deux tiges de guidage (4-1) guidées dans un bloc (2), par l'intermédiaire d'un vérin (4). L'action dudit vérin (4) se traduit ainsi par le déplacement vertical du serre-fil. Cette disposition est particulièrement importante car elle permet l'alignement du fil ou ficelle pour être sur la génératrice des zônes de ligaturage des noeuds ainsi qu'il sera précisé ultérieurement.

Par ailleurs, le bloc (2) est lui-même associé à la partie mobile (3) d'un vérin sans tige qui coulisse sur le tube vérin (3a). Le tube est fixé par une extrémité au plan support (1b) du bâti et par son autre extrémité au plan support (1d) du bâti.

D'autres moyens équivalents peuvent être utilisés, en respectant le principe du déplacement horizontal du dispositif serre-fil en position haute devant les têtes de serrage pour la formation des ligatures.

Il y a lieu maintenant de se référer et de décrire les têtes de fabrication des noeuds qui sont ainsi disposées dans le prolongement latéral par rapport aux éléments tendeurs.

Selon un exemple non limitatif, on utilise trois têtes de fabrication de noeud. Celles-ci sont disposées par rapport au plan d'appui arrière (1a) du bâti reliant les plans latéraux (1b) et (1c) et orientées vers l'avant. Plus précisément, lesdites têtes des noeuds comprennent chacune un élément support respectivement (8a, 8b, 8c) dont l'extrémité arrière est fixée au plan d'appui (1a) du bâti, et l'extrémité avant (8a1, 8b1, 8c1) est profilée par un pan coupé et formant un doigt fixe dont la fonction apparaîtra par la suite.

Lesdits éléments supports (8a, 8b, 8c) sont agencés à l'avant et à l'arrière avec des ouvertures formant palier autorisant l'engagement d'axes débordant extérieurement de part et d'autre desdits éléments et respectivement (16a, 16b, 16c) et (11a, 11b, 11c). En se référant à la figure 1, sur les axes (11a, 11b, 11c) sont disposés à articulation contrôlée de part et d'autre de chaque élément support (8a, 8b, 8c) des doigts mobiles (9a, 9b, 9c) et (10a, 10b, 10c). Ces doigts sont agencés dans leur partie avant avec un profil penté identique à celui des éléments supports et sont articulés par leur partie arrière, et dans un plan supérieur à leur axe d'articulation (11a, 11b, 11c), associée aux tiges des vérins (14a - 12a) (14b - 12b) (13) et d'autre part, (15a, 15b, 15c) disposées de part et d'autre des éléments supports (8a, 8b, 8c) en étant fixées sur les axes de rotation (16a, 16b, 16c). Ainsi qu'il apparaît, lesdits doigts sont assujettis à un mouvement de basculement vers le haut ainsi qu'il sera précisé par la suite. De manière avantageuse, les surfaces des profils pentés des doigts, sont de forme cylindrique afin de faciliter le glissement du fil.

De manière très particulière qui sera explicitée lors de la description du fonctionnement de la machine, les doigts (10a) (10b) (10c) et (9c) sont manoeuvrés par un seul vérin respectivement (15a) (15b) (15c) (13) ce qui leur confère suite au développement ou au retrait de la tige du vérin correspondant, deux positions : levée ou baissée.

Par contre, les doigts (9a, 9b) sont commandés par un groupe de deux vérins montés en série respectivement (14a, 12a) et (14b, 12b), ce qui leur confère par suite du développement ou au retrait successif des tiges des vérins correspondants de course plus réduite, trois positions : levée, intermédiaire et baissée. La course totale de l'ensemble des doigts reste la même.

D'une manière plus générale, dans le cas où la machine comprend "n" têtes de nouage, les doigts (9a) à (9(n-1)) ont trois positions et le doigt (9n) n'a que deux positions de manière semblable au doigt (9c) dans l'exemple illustré.

Il y a lieu, maintenant, de décrire les autres moyens complémentaires au mécanisme de mise en forme des ligatures qui présentent des dispositions se référant à la Demande Européenne 80422. On rappelle que dans celle-ci la formation de la ligature était obtenue par des moyens déformant successivement la trajectoire du fil et comprenant des lames agissant dans un plan horizontal, des doigts agissant dans un plan vertical. Selon la réalisation précitée et sous les doigts (9a à 9(n-1)), coulissent dans un plan horizontal des lames (17a, 17b, 17c) (18a, 18b, 18c) opposées deux à deux, lesdites lames étant sensiblement l'une contre l'autre en position rapprochée et s'écartant ou se rapprochant par des moyens de commande appropriés.

L'extrémité avant de chacune des lames est retournée pour former crochet et elles sont éloignées l'une de l'autre lorsqu'elles sont côte à côte.

Ces lames sont déplacées transversalement en s'éloignant l'une de l'autre pour déformer le fil dans une première phase de formation de la ligature. En particulier, chaque groupe de lames (17a, 17b, 17c) et (18a, 18b, 18c) est associé à un vérin assurant ces déplacements. Les lames (18a, 18b, 18c) sont solidaires en bout d'une plaque d'attelage (26a, 26b, 26c) verticale coulissant sur des tiges de guidage (25-1 - 25-2) disposées horizontalement entre les parois (1b) et (1c) du bâti et guidées dans des alésages appropriés.

De manière semblable, les lames (17a, 17b, 17c) sont solidaires en bout d'une plaque d'attelage (27a, 27b, 27c) équerrée et verticale coulissant sur des tiges de guidage (24-1 -24-2) disposées entre les parois (1b - 1c) du bâti et guidées dans des alésages appropriés. Les plaques d'attelage précitées sont translatées sur lesdites tiges de guidage respectivement par des vérins (24, 25) dont les tiges sont associées fixement à la plaque d'attelage la plus proche.

Par l'actionnement des vérins, on provoque l'écartement des lames, définissant un espace entre les extrémités formant crochet des lames (17a-18a) - (17b-18b) -(17c-18c).

Par ailleurs et pour assurer la déformation de la trajectoire du fil ou ficelle dans un plan vertical et vers le bas, chaque mécanisme de formation de ligature comprend un couple de crochets (20-21) solidaires d'un plateau (22), l'ensemble se déplaçant verticalement sous l'action de vérins de commande (23). Ces crochets sont disposés à l'opposé l'un de l'autre sur le plateau, de manière à se situer de part et d'autre des lames (17a-17b-17c-18a-18b-18c). Les crochets (21) comportent un bossage cylindrique (21a-21b-21c) et sont disposés en amont des doigts (9a-9b-9c) (à droite sur le dessin de la figure 1, et en arrière des lames précitées. Les crochets (20) profilés avec un léger déport vertical, comme exposé dans la Demande Européenne 80.422, présentent également un bossage cylindrique (20a-20b-20c) et sont disposés de manière particulière entre les couples de doigts (8a-10a) - (8b-10b) -(8c-10c).

L'ensemble se déplace verticalement par l'action des vérins (23a-23b-23c), le guidage étant assuré par des tiges cylindriques (22.1a - 22.1b), (22.1b - 22.2b), (22.1c - 22.2c) coulissant dans des ouvertures formées sur un plateau (1k) horizontal disposé entre les parois (1b - 1c) du bâti de la machine. Les vérins (23) sont fixés de toute manière appropriée sur ledit bâti.

Selon une caractéristique importante de la machine, il est prévu entre les têtes de fabrication des noeuds un dispositif complémentaire de serrage des noeuds. Plus particulièrement, chaque dispositif est monté sur un support (100a-100b) vertical fixé de toute manière appropriée sur le chant du plateau (1k) du bâti. Dans la partie supérieure du support (100a-100b) sont prévus, de part et d'autre de l'axe longitudinal de celui-ci, deux bossages fixes (47a-48a) et (47b-48b), tandis qu'un bossage mobile (46a)46b) est susceptible de se déplacer verticalement sous l'action d'un moyen de commande approprié. Plus particulièrement, ce bossage mobile, qui est associé au support (100a-100b) par une lumière et moyen de fixation non illustrés, se déplace dans l'axe central médian, entre les bossages à position fixe. Le bossage mobile est associé à la tige d'un vérin (42a-42b) dont le fût est fixé sur un support (61) disposé horizontalement à partir de la paroi (1a) du bâti ainsi qu'illustré figure 1. L'intérêt de ce dispositif complémentaire de serrage des noeuds apparaîtra lors de l'exposé de fonctionnement de la machine.

On fait maintenant référence à la figure 2 où sont illustrés les organes de la tête de nouage, les moyens de préhension et de maintien du produit à ligaturer et ceux assurant la dépose du noeud après son entrelacement, ainsi que la trajectoire du fil après l'opération d'entrelacement.

Pour faciliter la compréhension des dessins, certains éléments n'ont été qu'illustrés partiellement et il y a lieu de se reporter à la figure 1 à titre complémentaire.

Pour chaque tête de nouage, est prévu un mécanisme de préhension et de maintien du produit à ligaturer. Ce mécanisme est disposé dans le plan inférieur à chaque élément support (8a-8b-8c) des couples de doigts (9a-10a), (9b-10b), (9c-10c).

Plus particulièrement, le moyen de préhension et de maintien du produit à ligaturer se présente sous la forme d'une pince (49) ayant un corps cylindrique de manière avantageuse et se prolongeant en bout par une forme en bec (49a). Sur une partie du corps cylindrique de la pince est prévu, dans un plan transversal, une ouverture (49b) dans laquelle est disposée à articulation controlée une palette mobile (50a) ou mâchoire. Celle-ci est articulée sur un axe de liaison (57c) et se prolonge en arrière pour coopérer à son autre extrémité (50b) avec la tige d'un vérin (53a) monté verticalement. Le fût du vérin est lui-même associé fixement à un support vertical (51a) dont la partie supérieure est solidarisée au corps de la pince de préhension.

Lorsque la tige du vérin (53a) est développée, la palette mobile ou mâchoire est disposée à l'intérieur du corps de cylindre de la pince de préhension. Le retrait de la tige du vérin provoque l'ouverture des mâchoires de la pince.

Selon une autre disposition, la pince de préhension (50) se déplace sous l'action d'un vérin (52a) fixé de manière appropriée sur la paroi (1a) du bâti. Il y a lieu de noter que le déplacement de la pince provoque simultanément celui du support (51) du vérin (53) de commande d'ouverture des mâchoires de ladite pince.

En outre, le corps de la pince (50) coulisse dans une ouverture appropriée réalisée dans un bloc de dévêtissage (54a), ceci sous l'action du vérin (52a) précité. Ledit bloc. qui comprend un prolongement inférieur vertical, présente la caractéristique également de se déplacer d'avant en arrière ou réciproquement sous l'action d'un autre vérin (57a) fixé à la paroi (1a) du bâti. Son guidage est assuré par les tiges cylindriques (55a) (56a) coulissant dans un bloc (1m) fixé sur le support (11) horizontal, lui-même lié à la paroi verticale (1a) du bâti.

En se référant à la figure 2, on observe qu'en position développée du vérin (57a) le bloc de dévêtissage se situe près de l'espace de la zône de ligature défini par les doigts (9-10), les lames (17-18) et les crochets (20-21).

FONCTIONNEMENT

Il y a lieu maintenant de décrire le fonctionnement de la machine en se référant aux figures des dessins et en particulier aux figures 3, 4 et 5 particulièrement explicatives.

Au début du cycle, le vérin (41) est en position repos, de sorte que la fourche (40.1) du plateau (40) n'agit aucunement sur la ficelle (44) qui est donc libre. Les éléments tendeurs mobiles (28), (34a-34b)34c) sont en position abaissée. Les bossages mobiles (46a-46b) du dispositif complémentaire de nouage et prévus sur les supports (100a-100b) sont en position haute. Les doigts (9a-9b-9c) et (10a-10b-10c) sont tous en position basse. Les crochets et leurs bossages cylindriques correspondants (20a-20b-20c) (21a-21b-21c) sont également en position haute. Les lames (17a-17b-17c) (18a-18b-18c) sont les unes contre les autres dans la position illustrée figure 1.

La pince de préhension (49a) (une seule ayant été illustrée) et le bloc de dévêtissage (un seul étant illustré) sont en position rentrée. Le dispositif serre-fil (5-6) est ouvert et se trouve en position haute près de la paroi (1d) du bâti.

Le déroulement du cycle s'effectue de la manière suivante :

- L'élément tendeur mobile (28) se déplace vers sa position haute sous l'action du vérin (29). Son élévation permet, par l'intermédiaire de la patte (32) dudit élément (28), celle du fil (44) traversant la lumière (33), et son positionnement entre les mors (5-6) du serre-fil. Le vérin (7) est alors actionné et ferme les mors (5-6) dudit serre-fil.

- La phase suivante consiste au développement du fil devant les têtes de nouage. Pour ce faire, le vérin (3) est actionné et permet le déplacement du serre-fil (5-6) de droite à gauche selon la figure 1, déroulant le fil (44) de manière rectiligne.

- La phase suivante consiste en la mise en forme des différentes ligatures. Plus précisément, lorsque le vérin (3) est en fin de course, les doigts (9a-10a) (9b-10b) sont relevés et prennent la position levée, y compris les doigts (9a-9b). De ce fait, leur relevage permet la saisie et l'entraînement de la partie de fil en regard et leur placage contre les crochets supportant les bossages (20a-21a) (20b-21) (20c-21c) de telle sor te que la partie de fil se situe sous lesdits bossages. Les vérins (23a-23b-23c) sont ensuite alimentés et provoquent l'abaissement des couples de crochet précités, entraînant les parties de fil correspondantes vers le bas.

Par suite de son accrochage par le haut et par le bas par les moyens précités, et du positionnement de ceux-ci, le fil se trouve plaqué contre les lames (17a-18a) (17b-18b) (17c-18c). Les vérins (24-25) sont alors actionnés et provoquent le déplacement relatif des lames les unes par rapport aux autres par un écartement approprié pour la mise en forme complémentaire de la ligature. L'entraînement du fil s'effectue par les pattes recourbées desdites lames. A cet instant, les doigts (10a-10b-10c) reviennent en position abaissée.

Parallèlement au mouvement desdites lames, les autres éléments tendeurs mobiles (34a-34b-34c) sont déplacés en position haute, libérant la ficelle (44) et permettant son glissement sur les organes. Il faut ainsi noter la parfaite relation des mécanismes de mise en forme des ligatures de fil et des éléments tendeurs mobiles, libérant des parties de ficelles nécessaires aux ligatures. Les opérations décrites précédemment sont notamment illustrées à la figure 2, représentant l'un des entrelacements obtenus.

- La phase suivante consiste en la saisie par les pinces de préhension des produits à ligaturer et leur introduction dans les ligatures préformées.

Pour faciliter la compréhension des dessins, les produits à ligaturer n'ont pas été illustrés. Leurs extrémités, destinées à recevoir les ligatures, sont en regard desdites pinces.

En se référant à la figure 2, chaque pince de préhension (49a) par exemple est déplacée vers l'avant sous l'action du vérin (52a) et traverse l'entrelacement. Dans cette position, la mâchoire mobile (50a) de la pince est en position rentrée, puis, une fois la zône de ligaturage dépassée, ladite pince s'ouvre. Il y a lieu d'observer que le mouvement de sortie des pinces de chaque unité de nouage est simultané.

En se référant à la figure 3, en fin de course, le mors mobile (50a) de chaque pince se referme sur l'objet à ligaturer.

- La phase suivante constitue dans l'avancement simultané des blocs de dévêtissage (54a-54b-54c). Durant ce déplacement, lesdits chocs poussent le fil maintenu sur les différentes pinces de préhension. Le doigt (9c) est abaissé directement sous l'action de retrait de son vérin de commande, tandis que les doigts (9a-9b) prennent une position intermédiaire qui est illustrée figure 3. Simultanément, à cette opération, le premier mécanisme serre-fil (40) est actionné et la fourche (40') assure un blocage ferme du fil.

Par ailleurs, deux des éléments tendeurs mobiles, l'élément (28) et l'élément (34c) sont abaissés sous l'action de leur vérin respectif et assurent ainsi un retrait du fil (44).

De plus, le serre-fil (5-6) qui retient le fil est ramené en position basse, c'est-à-dire dans le plan des axes médians des moyens de préhension ou pinces cylindriques (49a-49b-49c). Par l'effet combiné des éléments tendeurs (28 et 34c) et le mouvement du serre-fil, la ligature autour de la pince cylindrique (49c) se ferme autour de celle-ci, formant ainsi le noeud. Par contre, les autres doigts (9a-9b) qui sont encore en position médiane, ne permettent pas la formation finale des noeuds correspondant à chacune des pinces (49a-49b). La ficelle conserve la possibilité de glisser sur lesdits pinces et doigts.

Le premier noeud étant réalisé sur la pince (49c), il est nécessaire de le disposer sur l'extrémité correspondante du produit à ligaturer. A cet effet, la pince de préhension (49c) se situe partiellement sur l'action de son vérin de commande et rentre dans le bloc de dévêtissage correspondant (54c) avancé préalablement. Par son retrait, la pince (49c) entraîne avec elle le produit (60) qui est donc tassé contre ledit bloc. Simultanément, la ficelle qui se trouve sur le corps cylindrique de la pince de préhension vient en appui contre le bloc précité et, par suite du dégagement total de la pince hors du bloc, la ficelle est déposée sur le produit (60) à ligaturer.

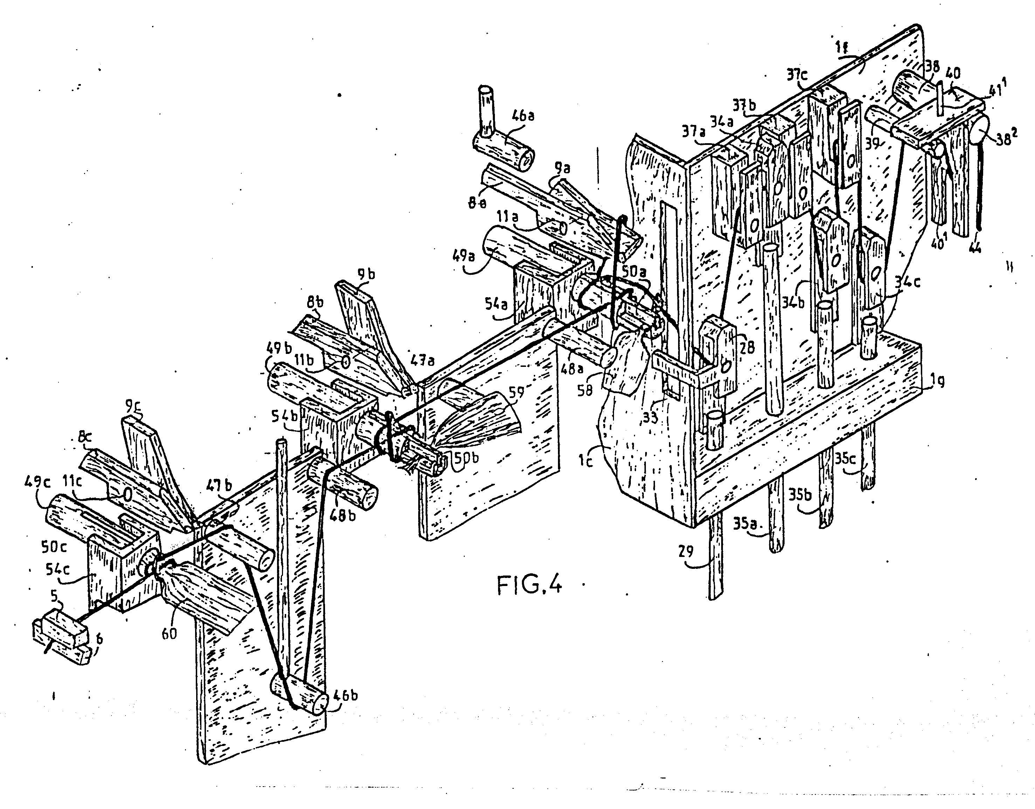

Il y a lieu, ensuite, de serrer le noeud sur le produit (60). Intervient alors le dispositif complémentaire de serrage du noeud illustré figures 1 et 4. Le bossage mobile (46b), disposé sur le plateau, préalablement en position haute, est sollicité par son vérin pour descendre le long de la paroi, entraînant avec lui la ficelle qui prend appui sur sa périphérie. Cela provoque ainsi une action de traction de la ficelle assurant le serrage du noeud. Simultanément, le doigt (9b) du second mécanisme de nouage s'abaisse. Les éléments tendeurs mobiles (28) et (34c) sont toujours sollicités par leur vérin respectif, tandis que l'élément tendeur mobile (34b) est à son tour sollicité par son vérin en position de descente tirant la ficelle. Ledit élément ne descend pas toutefois sur la totalité de sa course disponible, conservant une réserve de course utilisée ultérieurement.

Par cette action, le noeud autour du produit (60) est serré, et un second noeud est en formation sur une autre zône de ligaturage, à savoir dans l'exemple illustré, autour de la pince (49b). Durant cette phase de fonctionnement, le doigt (9a) est toujours en position médiane, la ficelle gardant sa capacité de glissement sur ledit doigt et la pince correspondante (49a).

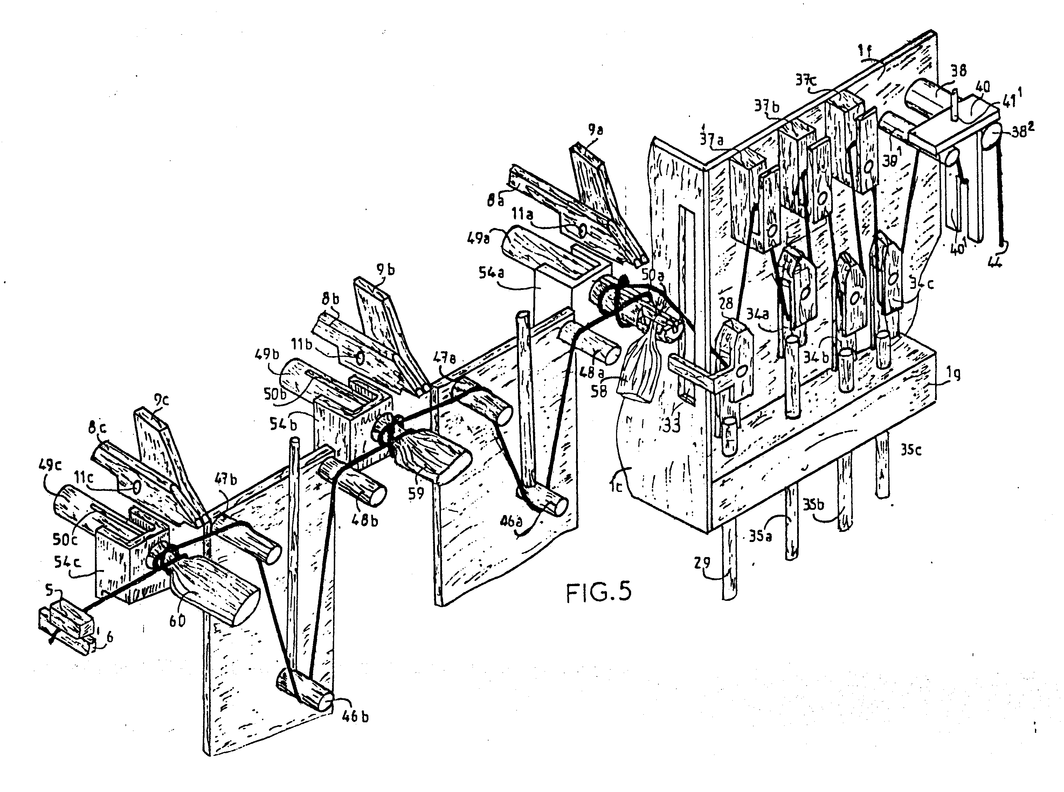

En se référant à la figure 5, illustrant la formation du second noeud de manière similaire au premier, on observe que la pince de préhension est également translatée en arrière par son vérin en rentrant dans le bloc de dévêtissage correspondant (54b) entraînant le produit à ligaturer (59). De manière identique, le fil vient en appui contre ledit bloc et sous l'effet de retrait de la pince, tombe sur le produit à ligaturer. Le second mécanisme de serrage complémentaire de fil intervient, et sous l'action du vérin (42a) le bossage mobile (45a), préalablement en position haute, descend vers le bas, entraînant avec lui la ficelle qu prend appui sur sa périphérie. Il y a lieu de préciser que la descente dudit bossage ne s'effectue pas sur la tota lité de sa course potentielle pour les raisons exposées par la suite.

Parallèlement, le doigt (9a) du mécanisme de formation de la troisième ligature prend la position basse, et l'élément tendeur mobile (34a) est à son tour tracté vers le bas, sous l'action du vérin (36a) sur une partie de sa course potentielle. Dans ces conditions, le second noeud se serre autour du produit (59) à ligaturer. Par suite de l'effet d'abaissement du doigt (9a) le troisième noeud se forme autour de la pince de préhension (49a).

Il reste à effectuer le troisième noeud. Cette phase n'est plus illustrée aux figures des dessins mais découle des figures précédentes. La pince de préhension (50a) sollicitée en arrière par son vérin, rentre à son tour dans le bloc de dévêtissage (54a) correspondant en tirant le produit à ligaturer (58). Le fil est alors déposé comme précédemment sur le produit à ligaturer.

Comme indiqué précédemment, les éléments tendeur mobiles (34a) (34b) et le bossage (46a) n'ont été sollicités que partiellement par rapport à leur course potentielle. Le serrage du troisième noeud permet d'utiliser les capacités restantes et lesdits éléments et bossages viennent alors en position basse définitive.

Dans l'exemple illustré, les trois noeuds ayant été réalisés, les mécanismes reprennent leur position initiale. En particulier, les bossages (46a) (46b) du mécanisme complémentaire de serrage des noeuds reprennent leur position initiale haute,le serre-fil (5-6) s'ouvre et vient en position haute tandis que, sous l'action du vérin (3) de commande, ledit serre-fil est ramené en position initiale vers la paroi (1c). Par ailleurs, les pinces de préhension s'entrouvent,libérant ainsi les produits ligaturés. Ceux-ci sont évacués lors du cycle suivant. En effet, la ficelle lie le dernier produit et passe dans les mâchoires du serre-fil. Lors de la translation de ce dernier dans le cycle suivant, il provoque l'évacuation des produits ligatu rés précédemment, tout en tirant la ficelle devant la tête de nouage. Par ailleurs, un dispositif coupe-fil non illustré, situé en aval des mors du serre-fil (5-6) sépare le chapelet des produits ligaturés des suivants.

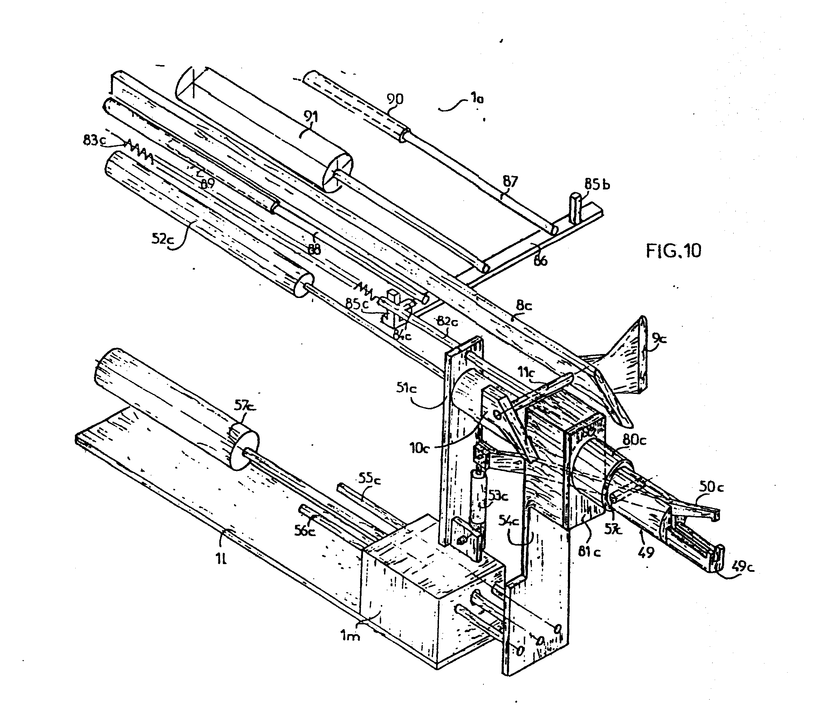

On a illustré en variante divers aménagements possibles de certains des mécanismes décrits précédemment. Ces variantesr s'intègrent dans le processus d'automatisation de la machine, et concernent en particulier le mécanisme de dépose du noeud et d'autre part le mécanisme tendeur et distributeur du fil pour le serrage des ligatures sur les extrémités des produits à ficeler. Dans les figures 10, 11, 12, les moyens identiques aux moyens décrits précédemment sont affectés des mêmes références. A titre d'exemple, il est illustré un mécanisme pour un poste de ligaturage. Il est bien évident qu'il y a lieu de les multiplier en fonction du nombre de postes. Le poste décrit ci-arpès est le troisième et les références sont associées à la lettre c, comme elles pourraient l'être avec les références a, b pour les autres postes.

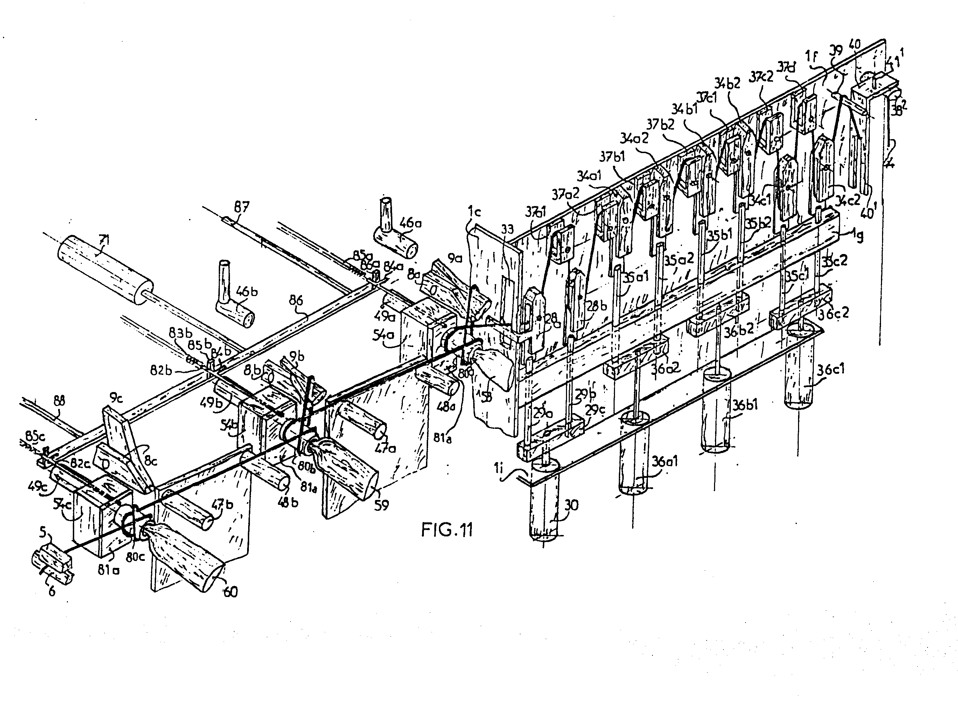

La figure 11 illustre le mécanisme sensiblement modifié de dépose du noeud particulièrement intéressant lorsque les objets à ficeler sont de petites dimensions, sans exclure les autres. Pour éviter que le noeud disposé précédemment sur le corps de pince ait tendance à pénétrer à l'intérieur du bloc dévêtisseur (54a, 54b ou 54c) lors du mouvement de retrait de la pince, et que le serrage du noeud en soit ainsi affecté. on a prévu une variante de réalisation. Le bloc dévêtisseur (54) est aménagé avec un bossage ou fourreau (80c) complémentaire disposé dans un plan perpendiculaire et horizontal par rapport au bloc et à l'intérieur duquel coulisse la pince de préhension (49). Ce fourreau (80c) est disposé horizontal dans le plan de la pince pour permettre le déplacement de celle-ci. En outre, ledit bloc dévêtisseur est agencé sur sa face frontale extérieure avec en appui une plaque dévêtisseur (81c) entourant le fourreau précité. Ladite plaque est associée à une tige (82c) disposée en arrière, cette dernière étant guidée par le support vertical (51c). L'extrémité arrière de ladite tige est solidarisée à un ressort (83c) dans le même plan axial et lui-même fixé au châssis (1a). Selon une disposition importante ladite tige (82c) est agencée près de son extrémité arrière avec un ergot de retenue (84c) susceptible de prendre appui sur une butée (85c) verticale disposée elle-même sur une plaque support horizontale (86). Ainsi qu'il apparaît figure 11, ladite plaque (86) est maintenue et guidée en translation par des tiges cylindriques (87 - 88) coulissantes respectivement dans des bossages longs (89 - 90) associés au châssis (1a). Le vérin (91) assure la translation de ladite plaque (86).

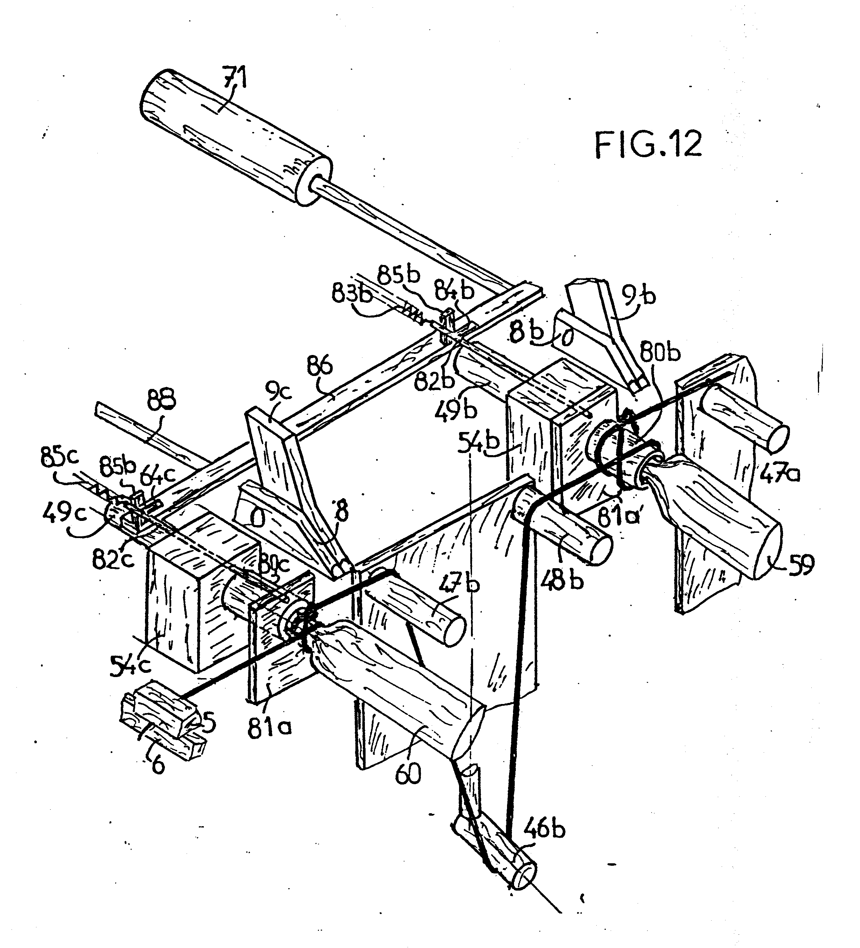

Les figures 11 et 12 illustrent le mode de dépose du noeud à partir des éléments illustrés figure 10. Ainsi qu'il apparaît, le noeud est directement formé autour de chacun des fourreaux (80c, 80a, 80b) pour les mécanismes de formation des ligatures, et non sur les pinces (49) comme précédemment. Durant la phase de dépose des noeuds due aux actions simultanées des blocs de dévêtissage (54), des éléments tendeurs (30) et (36c), la pince de préhension (49) entraîne la partie vide du produit à ligaturer à l'intérieur des fourreaux (80a, 80b, 80c). Le vérin (57) commande en arrière le bloc de dévêtissage (54) et le fourreau (80) qui en est solidaire. La plaque de dévêtissage initialement en appui contre ledit bloc (54) se détache de celui-ci par suite du mouvement arrière dudit bloc et par le fait que sa position est déterminée fixement par la sollicitation en avant de la barre (86) dont les butées (85a) (85b) (85c) formant appui sur les ergots de retenue (84a, 84b, 84c). Ladite barre (86) a été préalablement déplacée vers l'avant suite à la commande exercée sur le vérin (91).

Dans ces conditions, la plaque de dévêtissage (81c) glisse le long du fourreau (80c) qui revient en arrière, et pousse le noeud préalablement formé sur les produits à ligaturer.

Simultanément à cette action, le bossage mobile (46a, 46b, 46c) du dispositif complémentaire de serrage est déplacé par son vérin, et l'effet conjugué des bossages (46, 47, 48) assure un serrage ferme et durable du noeud.

Il y a lieu de préciser que le doigt (9) du système de nouage suivant pour la formation d'une autre ligature, a pivoté dans les conditions décrites précédemment, ce qu provoque la dépose complète du noeud sur le fourreau (80) suivant qui agit de manière similaire.

Lorsque toutes les opérations de nouage sont terminées, les différentes pinces (49) situées à l'intérieur ou à l'arrière des fourreaux s'ouvrent et libèrent les produits ligaturés. Le vérin (91) est actionné pour assurer un mouvement de retrait entraînant avec lui la plaque support (86). Les butées verticales (85a, 85b, 85c) dégagent ainsi les ergots (84a, 84b, 84c) et les tiges (82a, 82b, 82c) sous l'effet de rappel des ressorts (83a, 83b, 83c) reviennent en position initiales ramenant les plaques dévêtisseuses (81a, 81b, 81c) contre la face d'appui de chacun des blocs dévêtisseurs (54).

Il y a lieu de souligner les avantages de cette variante de réalisation pour la dépose des noeuds. Celle-ci s'effectue de manière très précise et efficace à l'endroit le plus proche de la partie remplie de l'objet à ligaturer permettant d'avoir une parfaite présentation du produit et un maintien ferme du contenu.

Par ailleurs, la figure 11 illustre une variante du mécanisme tendeur et distributeur de fil permettant de doubler la vitesse de retrait de la ficelle, et de réduire la durée du cycle. A cet effet, et comparativement à la réalisation de la figure 1, on a doublé les blocs tendeurs mobiles et fixes. Les éléments fixes (37a, 37b, 37c) sur le bâti ont été doublés en (37a1 -37a2) (37b1 - 37b2) (37c1 - 37c2). Un élément tendeur à position fixe (37d) a été ajouté et disposé près du mécanisme d'amenée de fil. Les éléments tendeurs mobiles (34a, 34b, 34c) ont été doublés en (34a1 - 34a2) (34b1 - 34b2) (34c1 - 34c2). Lesdits éléments mobiles sont associés par paire par l'intermédiaire des tiges (35a1 - 35a2) - (35b1 - 35b2) - (35c1 - 35c2) et barres de liaison (36a2 - 36b2 - 36c2)aux vérins de commande (36a1 - 36b1 - 36c1). L'élément tendeur mobile (28) a également été doublé en (28a - 28b). Les éléments tendeurs mobiles sont ainsi attelés par paire à un même vérin dont le diamètre est augmenté pour obtenir le même effort de serrage, mais avec une course limitée par deux.

Le fonctionnement du mécanisme tendeur et distributeur de fil est le même que celui décrit précédemment.

Les avantages ressortent bien de l'invention. On souligne l'automatisation complète de la machine qui effectue simultanément plusieurs ligatures avec un décalage de phases, lors de leur formation. On peut ainsi réaliser des chapelets de produits avec un nombre varié de ceux-ci. Il suffit de prévoir notamment les éléments tendeurs mobiles et les dispositifs complémentaires de serrage des noeuds en fonction du nombre de ligatures à réaliser.

L'invention ne se limite aucunement à celui de ses modes d'application non plus qu'à ceux des modes de réalisation de ses diverses parties ayant plus spécialement été indiquées ; elle en embrasse au contraire toutes les variantes.

**Revendications**

-1- Perfectionnements aux machines automatiques permettant de ligaturer au moyen d'un fil, ficelles ou analogues, des produits du type saucisses, saucissons et similaires, du type comprenant notamment, au moins :
- un mécanisme contrôlant l'amenée et la distribution du fil,
- un mécanisme assurant le serrage du fil puis son déroulement vers la zône d'entrelacement selon une trajectoire rectiligne contrôlée en vue de former la ligature ;
- un mécanisme assurant la mise en forme du fil pour la ligature par déformations successives et complémentaires de sa trajectoire dans plusieurs directions par rapport à la trajectoire rectiligne initiale en vue de ligaturer les produits sous la forme d'un noeud dit cabestan ;
- un mécanisme assurant la préhension du produit à ligaturer et son positionnement à l'intérieur de la zône de ligaturage par une translation contrôlée perpendiculaire à la trajectoire rectiligne initiale du fil ;
- un mécanisme assurant la dépose de la ligature sur le produit ;
- un mécanisme assurant le serrage du noeud après dépose de la ligature sur le produit, ladite machine étant caractérisée en ce qu'elle comprend, disposés sur un bâti de base agencé et profilé de manière appropriée, des moyens permettant la mise en forme simultanée de "n" ligatures sur des produits se présentant en continu avec des mécanismes correspondant au nombre de ligatures à effectuer, la formation des ligatures et leur dépose sur les produits à ligaturer s'effectuant selon un cycle préétabli et progressif, ligature par ligature,
- des mécanismes de contrôle en alimentation en fil,
- des mécanismes tendeurs de fil,
- des mécanismes de serrage complémentaires des noeuds,
- des mécanismes de présentation du fil,
- des agencements particuliers des moyens de déformation de la trajectoire du fil déroulé devant les têtes de nouage, des moyens assurant la commande commune et séparée des divers mécanismes nécessaires à la formation des ligatures et au déplacement des organes de préhension des produits à ligaturer, l'ensemble des moyens et mécanismes précités assurant une automatisation complète de fabrication de "n" ligatures sur des produits précités.

-2- Machine selon la revendication 1, caractérisée en ce qu'elle comprend un bâti (1) agencé avec différentes parties formant prolongements, supports, et moyens de guidage des mécanismes dans des plans horizontaux, verticaux, latéraux, avancés ou en retrait, référencés en 1a-1b-1c- 1d-1e-1f-1g-1h-1i-1j-1k-1l-1m, permettant, après positionnement des différents mécanismes et moyens, une trajectoire rectiligne du fil d'attache des produits à ligaturer.

-3- Un mécanisme d'alimentation en fil et de serrage de la machine selon la revendication 1, caractérisé en ce qu'il comprend une plaque (40) mobile en translation verticale par un plateau (39) support et présentant dans sa partie inférieure une forme profilée (40-1) disposée entre deux galets de renvoi (38-1) (38-2) de section différente fixés au bâti, définissant une certaine trajectoire du fil, le positionnement de ladite plaque par rapport aux galets de renvoi autorisant le glissement ou le freinage et serrage du fil.

-4- Machine selon la revendication 1, caractérisée en ce qu'elle comprend un mécanisme tendeur et distributeur de fil disposé entre le mécanisme d'alimentation de fil et le dispositif assurant le déroulement du fil devant les organes des têtes de nouages ; ledit mécanisme tendeur étant remarquable en ce qu'il comprend des éléments fixes et des éléments mobiles, le nombre d'éléments fixes (n) étant égal au nombre de têtes de nouages et le nombre d'éléments mobiles à (n+1) ; lesdits éléments contrôlant le déroulement du fil lors de la mise en forme de chacune des ligatures ou noeuds et assurant le serrage de ceux-ci en combinaison avec d'autres moyens à l'instant final.

-5- Mécanisme tendeur selon la revendication 4, caractérisé en ce que les éléments mobiles (28) (34a-34b-34c) et les éléments fixes (37a-37b-37c) sont disposés de manière appropriée sur les parois du bâti, les éléments mobiles étant situés sous les éléments fixes et avec un intervalle entre eux pour permettre l'insertion des éléments mobiles entre les éléments fixes en position haute, le fil étant guidé selon un cheminement alternatif entre lesdits éléments.

-6- Mécanisme tendeur selon la revendication 5, caractérisé en ce que les éléments fixes et les éléments mobiles sont doublés lesdits éléments mobiles étant associés par paire par l'intermédiaire de tiges et barres de liaison avec des moyens de commande du type vérin.

-7- Mécanisme tendeur selon la revendication 6, caractérisé en ce que les éléments fixes sont doublés (37a1 - 37a2) (37b1 -37b2) (37c1 - 37c2) et comprenant un élément fixe supplémentaire (37d) situé près du mécanisme d'amenée de fil, et en ce que les éléments mobiles sont doublés (28a - 28b) (35a1 - 35a2) (35b1 -3b2) (35c1 - 35c2).

-8- Mécanisme tendeur selon la revendication 5, caractérisé en ce que les éléments tendeurs fixes (37a - 37b - 37c) et les éléments tendeurs mobiles (34a - 34b - 34c) en disposition simple ou doublée, présentent une forme en chape dont les ouvertures sont orientées vers le haut et vers le bas respectivement et sont aménagées pour recevoir une poulie folle (70) dont les joues (70-1) sont avantageusement encastrées dans des évidements ménagés dans les branches de la chape assurant une parfaite tenue de la ficelle ; dans la partie supérieure de chaque élément tendeur étant prévu un moyen pour éviter le déjantage inopiné de la ficelle, ledit moyen étnt en regard d'un méplat facilitant l'introduction de la ficelle.

-9- Mécanisme tendeur selon la revendication 5, caractérisé en ce que l'élément tendeur mobile supplémentaire (28) assure une autre fonction d'amenée du fil vers le second mécanisme de serrage du fil, et est agencé avec un prolongement équerré (32) susceptible de coulisser lors du déplacement dudit tendeur le long d'une lumière (33) verticale dans le support (1c) du bâti, et sa position permet un alignement du fil devant l'axe des têtes de nouage.

-10- Mécanisme serre-fil selon les revendications 1 et 2, caractérisé en ce qu'il comprend des moyens lui assurant un double mouvement en translation et verticalement, le mouvement vertical permettant l'alignement du fil en égard de la génératrice des zônes de ligaturage des noeuds, le mouvement en translation permettant le déroulement du fil devant les têtes de nouage.

-11- Mécanisme de mise en forme des ligatures selon la revendication 1, du type comprenant des doigts pour modifier vers le haut la trajectoire du fil, des crochets pour modifier vers le bas ladite trajectoire et des lames d'écartement latéral, lesdits doigts crochets ou lames étant assujettis à des moyens de commande assurant leur déplacement, ledit mécanisme étant caractérisé en ce que les doigts (9a, 10a) (9b, 10b) (9c, 10c) sont montés à articulation sur des éléments supports (8a, 8b, 8c) et sont agencés à leur partie avant avec un profil penté de préférence cylindrique ; les doigts (10a, 10b, 10c, 9c) étant manoeuvrés pour avoir deux positions : levée et baissée ; et les doigts (9a - 9b) étant manoeuvrés pour avoir trois positions levée intermédiaire et baissée, la course totale des doigts (9a - 9b) restant la même.

-12- Mécanisme selon la revendication 11, caractérisé en ce que les doigts (9a) à (9(n-1)) ont trois positions et le doigt (9n) a deux positions.

-13- Machine selon les revendications 1 et 2, caractérisée en ce qu'elle comprend des mécanismes complémentaires de serrage des noeuds en nombre égal au moins à celui des têtes de nouage, chaque mécanisme comprenant des moyens montés sur un support (100a -100b) vertical avec de part et d'autre de l'axe horizontal de celui-ci deux bossages fixes (47a - 48a) et (47b -48b) de renvoi de la ficelle tandis qu'un bossage mobile (46a -46b) est susceptible de se déplacer verticalement dans une lumière formée dans le support correspondant, sous l'action d'un moyen de commande en entraînant vers le bas la ficelle qui passe sur les bossages fixes.

-14- Mécanisme de préhension et de maintien du produit à ligaturer et de dépose du fil sur le produit à ligaturer selon la revendication 1 du type comprenant pour chaque tête de nouage, une pince de préhension, un bloc de dévêtissage à l'intérieur duquel coulisse ladite pince entraînant le produit saisi, caractérisé en ce que la pince (49) est agencée avec un corps cylindrique se prolongeant sous la forme d'un bec (49a) ; sur une partie du corps cylindrique de ladite pince étant prévu dans un plan transversal, une ouverture (49b) dans laquelle est disposée à articulation contrôlée, une palette mobile (50) ; ladite palette étant articulée dans sa partie médiane audit corps et se prolongeant en arrière à son autre extrémité pour coopérer avec un moyen de commande assurant son ouverture ou fermeture ; le fil de nouage étant déposé sur le corps cylindrique de ladite pince puis tombant autour de l'extrémité du produit à ligaturer lors du retrait de la pince et sous l'action de contre-appui du bloc dévêtisseur.

-15- Mécanisme de préhension et de maintien du produit à ligaturer et de dépose du fil sur le produit à ligaturer, selon la revendication 1, du type comprenant pour chaque tête de nouage une pince de préhension, un bloc de dévêtissage à l'intérieur duquel coulisse ladite pince entraînant le produit saisi, caractérisé en ce que le bloc dévêtisseur (54) est aménagé avec un fourreau (80c) dans un plan perpendiculaire et horizontal, et à l'intérieur duquel coulisse la pince de préhension ; ledit bloc étant agencé sur sa face frontale extérieure avec une plaque dévêtisseuse (81c) entourant ledit fourreau et associé à un moyen de commande autorisant dans une position donnée l'évacuation et la dépose du fil préalablement disposé sur le fourreau sur l'extrémité du produit à ligaturer.

-16- Mécanisme selon la revendication 1, caractérisé en ce que le moyen de commande de la plaque dévêtisseur (81c) est une tige solidarisée à une extrémité à un ressort de rappel ; ladite tige comprenant un moyen de retenue (84c) coopérant avec un moyen complémentaire de contre-appui (85c) disposé sur une plaque support (86) sollicitée elle-même par un moyen de commande (91) selon les phases de fonctionnement de la machine pour la dépose des ligatures.

0224421

FIG.1

0224421

FIG.2

0224421

FIG.3

0224421

FIG.4

0224421

FIG.5

0224421

FIG.6

FIG.7

0224421

FIG.8

FIG.9

0224421

FIG.10

0224421

FIG.11

0224421

FIG.12

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | EP-A-0 080 422 (PUJOL)<br>* En entier * | 1,2,9 | A 22 C 11/12 |
| | --- | | |
| A | FR-A-2 451 317 (TURROQUES)<br>* Page 4, ligne 25 - page 7, ligne 9; figure 3 * | 1 | |
| | ----- | | |

|  |
|---|
| DOMAINES TECHNIQUES RECHERCHES (Int. Cl.4) |
| A 22 C |

Le présent rapport de recherche a été établi pour toutes les revendications

| Lieu de la recherche | Date d'achèvement de la recherche | Examinateur |
|---|---|---|
| LA HAYE | 26-01-1987 | DE LAMEILLIEURE D. |